Europäisches Patentamt

European Patent Office

Office européen des brevets

(11) Veröffentlichungsnummer: **0 001 438**
**A1**

## (12) EUROPÄISCHE PATENTANMELDUNG

(21) Anmeldenummer: 78101029.3

(22) Anmeldetag: 29.09.78

(51) Int. Cl.²: **F 23 G 7/06**, **F 01 N 3/10**,
**B 01 D 53/34**

(30) Priorität: 10.10.77 DE 2745493

(43) Veröffentlichungstag der Anmeldung: 18.04.79
Patentblatt 79/8

(84) Benannte Vertragsstaaten: BE CH DE FR GB NL

(71) Anmelder: Bayer Aktiengesellschaft, Zentralbereich
Patente,Marken und Lizenzen Bayerwerk, D-5090
Leverkusen 1 (DE)

(72) Erfinder: Hüning, Werner, Carl-Leverkus-Strasse 3,
D-5068 Odenthal (DE)
Erfinder: Gockel, Claus, Ginsterweg 3, D-5068
Odenthal (DE)
Erfinder: Börger, Götz-Gerald, Dr.,
Beethovenstrasse 24, D-4019 Monheim (DE)
Erfinder: Franzke, Gerd-Peter, Oswald-Spengler-
Strasse 34, D-5090 Leverkusen 3 (DE)

(54) **Verfahren und Vorrichtung zur Verbrennung explosibler Gase.**

㊗ Es wird ein Verfahren sowie ein Brenner zur rückzündsicheren Verbrennung von zumindestens zeitweise explosiblen Gasen beschrieben, bei dem die zu verbrennenden
Gase unter Drall durch einen Ringkanal (3), der der Beruhigung des Gasstromes dient, in einen Verbrennungsraum (4) eingeleitet werden und dort unter Ausbildung
eines überkritischen Drallfeldes mit peripherer Vorwärts-
und innerer Rückströmung verbrannt werden.

- 1 -

BAYER AKTIENGESELLSCHAFT          5090 Leverkusen, Bayerwerk
Zentralbereich                    Dp-by
Patente, Marken und Lizenzen

Verfahren und Vorrichtung zur Verbrennung explosibler Gase

Die vorliegende Erfindung betrifft ein Verfahren und eine Vorrichtung zur thermischen Reaktion zumindest zeitweise explosibler Gase und/oder Gasgemische. Das Hauptanwendungsgebiet der vorliegenden Erfindung liegt in der thermischen Reinigung von Abluft, die zumindest zeitweise aus einem zündfähigen Gemisch besteht.

Für Abluft, insbesondere auch aus chemischen Produktionsbetrieben, die stark wechselnde Mengen an organischen Bestandteilen enthält, ist in besonders schwierig gelagerten Fällen als einzige wirkungsvolle Reinigungsmaßnahme nur das thermische Zersetzen der organischen Stoffe möglich. In anderen Fällen wäre es wünschenswert, technisch aufwendige chemische und physikalische Abgasreinigungsverfahren durch ein thermisches Verbrennungsverfahren zu ersetzen, wobei die bei der Verbrennung freiwerdende Wärme als Energiequelle zur Verfügung gestellt werden könnte.

Besteht das Trägergas praktisch aus Luft, d.h. ist die Sauerstoffkonzentration ungefähr 21 %, so kann dieses Gas als Verbrennungsluft in einen geeigneten Brenner mit nach-

Le A 18 430 - Ausland

geschalteter Ausbrennkammer eingeleitet werden. Es muß dann ein Hilfsbrennstoff, z.B. Erdgas oder Heizöl, zugespeist werden, um die Zersetzungstemperatur in der Flamme, z.B. 850°C, zu erreichen. Es ist dabei bekannt, die Abluft in Drallbrennkammern zu verbrennen. Ein spezieller Typ einer Drallbrennkammer ist z.B. unter dem Begriff Combustor bekannt und beispielsweise beschrieben in Brennstoff, Wärme, Kraft Nr. 3, März 1971, Seiten 98 bis 102.

Der Sauerstoffgehalt sowie die Beladung des Abgases mit brennbaren organischen Stoffen kann in weiten Grenzen sehr schwanken, so daß das Abgas zumindest zeitweise soviel Sauerstoff und zugleich auch organische Beladung enthält, daß es zündfähig, oder auch explosiv ist. Wird ein solches Gas nun in eine Flamme geleitet, dann besteht die Gefahr der Rückzündung in die Brennerzuleitung und weiter bis in den Bereich, aus dem dieses Abgas abgesaugt wird.

Bisher ist kein Verfahren bekannt, nach dem solche, in Konzentration und Menge stark schwankende, explosible Gemische direkt in eine Verbrennungseinrichtung zum Zersetzen der organischen Stoffe gefahrlos eingeleitet werden können. Eine bekannte Möglichkeit für einen gefahrlosen Betrieb ist das Zumischen einer so großen, nicht organisch beladenen Luft- oder Gasmenge zur Verdünnung der explosiblen Gemische, daß die resultierende Konzentration die untere Explosionsgrenze in jedem Fall unterschreitet. Dieses Verfahren hat jedoch den Nachteil, daß ständig auch die Zusatzluft- oder Zusatzgasmenge bis auf die Zersetzungstemperatur (z.B. 850°C) erwärmt werden muß. Sind die Schwankungen der Abgasmenge sehr groß, dann wird die Zusatzmenge immer ungünstiger im Ver-

Le A 18 430

- 3 -

herhältnis zur mittleren zu verbrennenden Abgasmenge, d.h. der spezifische Hilfsbrennstoffbedarf je m$^3$ Abgas wird im zeitlichen Mittel immer größer. Darüberhinaus muß die Verbrennungseinrichtung für den um ein vielfaches erhöhten Gasdurchsatz dimensioniert sein.

Aufgabe der vorliegenden Erfindung ist es daher, ein Verfahren und eine Vorrichtung zur Verbrennung explosibler Gase zur Verfügung zu stellen.

Gegenstand der vorliegenden Erfindung ist ein Verfahren zur rückzündsicheren thermischen Verbrennung zumindest zeitweise explosibler Gase und/oder Gasgemische, das dadurch gekennzeichnet ist, daß das zu verbrennende Gas und/oder Gasgemisch vor dem Einleiten in einen Verbrennungsraum beruhigt wird, indem dieses einen hindernisfreien Ringkanal ausreichender Länge durchströmt, wobei die Strömungsgeschwindigkeit in dem Ringkanal größer ist, als die unter den möglichen zu verbrennenden Gaszusammensetzungen auftretende größte Flammenausbreitungsgeschwindigkeit in dem beruhigten Gasstrom, daß dem Gasstrom ferner ein ausreichender Drall, wobei die Drallachse mit der Ringkanal- und Verbrennungsraumachse zusammenfällt, aufgeprägt wird, so daß sich im Verbrennungsraum ein überkritisches Drallfeld mit peripherer Vorwärts- und innerer Rückströmung ausbildet, und wobei gegebenenfalls zusätzlich Brennstoff und/oder Luft dem Verbrennungsraum zugeführt wird.

Die Strömungsverhältnisse im überkritischen Drallfeld sind in "Gas-Wärme-International", Band 26, Nr. 1, Seiten 5-12 (1977) beschrieben.

Le A 18 430

- 4 -

Zur Gewährleistung einer rückzündsicheren Einführung der zu verbrennenden zündfähigen Gas ist Voraussetzung, daß die örtliche Strömungsgeschwindigkeit an jeder Stelle in dem Einströmorgan größer ist als die örtliche Flammenausbreitungsgeschwindigkeit. Die die örtliche Flammenausbreitungsgeschwindigkeit bestimmenden Einflußgrößen ergeben sich zunächst aus der chemischen Zusammensetzung des Gasgemisches, d.h. der Art der luftfremden Stoffe, dem Sauerstoffgehalt und dem Wasserdampfgehalt, sowie der Homogenität der Mischung und der Temperatur des zu verbrennenden Gasgemisches. Die minimale Flammenausbreitungsgeschwindigkeit läßt sich als Grenzwert für laminare Gasströmung ermitteln. Bei turbulenter Gasströmung kann die örtliche Flammengeschwindigkeit um ein Vielfaches höher liegen als die sich als Grenzwert ergebende minimale Flammenausbreitungsgeschwindigkeit bei laminarer Strömung.

Die die örtliche Strömungsgeschwindigkeit im Einströmorgan bestimmenden Einflußgrößen sind die mittlere Strömungsgeschwindigkeit im Einströmorgan, das Geschwindigkeitsprofil, der Turbulenzgrad der Strömung, sowie Wirbelbildung durch Strömungshindernisse. Je asymmetrischer das Geschwindigkeitsprofil und je turbulenter die Strömung ist, desto höher muß die aufgeprägte mittlere Strömungsgeschwindigkeit im Einströmorgan sein, damit die örtliche Flammengeschwindigkeit an jeder Stelle im Einströmorgan übertroffen wird. Eine hohe mittlere Strömungsgeschwindigkeit verlangt jedoch einen erheblichen Vordruck der zu verbrennenden Gase vor dem Einstromorgan. Der Aufbau eines solchen Vordruckes für ein explosibles Gasgemisch ist jedoch grundsätzlich problematisch. Neben der Temperaturerhöhung während der Kompression und damit Erhöhung der örtlichen Flammenge-

Le A 18 430

- 5 -

schwindigkeit wird der Turbulenzgrad der Strömung ungünstig beeinflußt. Eine merkliche Druckerhöhung bei explosiblen Gasen birgt zudem das Risiko der unkontrollierbaren Zündung des Gasgemisches durch Entladung elektro-statischer Aufladungen aufgrund von mechanischer Reibung. Nicht zuletzt würde das Verfahren zur thermischen Abgasreinigung durch den erhöhten Energieaufwand bei der Erzeugung des notwendigen Vordrucks belastet.

Überraschenderweise wurde gefunden, daß erfindungsgemäß trotz der im anschließenden Brennerraum erzeugten hohen Turbulenz und Pulsation das dem Brenner zugeführte Gas rückzündsicher beruhigt werden kann, ohne daß das im Brennraum vorherrschende hochturbulente Strömungsfeld die Beruhigung der Gasströme behindert.

Die minimale mittlere Strömungsgeschwindigkeit des Gases im Ringkanal, bei der noch Rückzündsicherheit gewährleistet ist, muß im Einzelfall experimentell ermittelt werden. Mittlere Mindestgeschwindigkeiten, die etwa das 1,5- bis 2-fache der unter den möglichen zu verbrennenden Gaszusammensetzungen auftretenden, experimentell zu ermittelnden größten Flammenausbreitungsgeschwindigkeiten betragen, sind im allgemeinen ausreichend. Bevorzugt ist die mittlere Strömungsgeschwindigkeit über den Querschnitt des Ringkanals gleich und besitzt ein konstantes Strömungsprofil über dessen Querschnitt, da in diesem Falle die minimale mittlere integrale Strömungsgeschwindigkeit den geringsten Wert annehmen kann.

Le A 18 430

- 6 -

Die explosiblen Gase werden mit einer Temperatur, die mindestens unterhalb der Selbstentzündungstemperatur der Gase liegt, in die Verbrennungseinrichtung eingeführt. Bevorzugt beträgt die Temperatur der Gase zwischen Umgebungstemperatur und etwa 100°C.

Zu den Wandungen des Ringkanals hin fällt die Strömungsgeschwindigkeit des Gases über einen Bereich, der durch die laminare Grenzschichtdicke bestimmt ist, schnell gegen 0 ab. Die Wandungen des Ringkanals müssen in der Lage sein, soviel Wärme abzuführen, daß innerhalb der Grenzschicht mit geringer Strömungsgeschwindigkeit keine Rückzündung auftreten kann, d.h. der durch die Wärmeableitung der Wandung gegebene Löschabstand soll in der Größenordnung der laminaren Grenzschichtdicke liegen. Bevorzugt bestehen die Wandungen aus Metall und werden gekühlt, um eine Erwärmung durch Strahlung und Konvektion aus dem Brennerraum zu vermeiden.

Eine andere Ausführungsform des erfindungsgemäßen Verfahrens besteht darin, die Wandungen des metallischen Ringkanals mit Schlitzen oder kleinen Löchern, bevorzugt mit mindestens je einem Ringschlitz, zu versehen, durch die Inertgas oder Luft in Innere des Kanals einströmt, so daß sich innerhalb der laminaren Grenzschicht zumindest in einer Querschnittsfläche über den Umfang des Ringkanals ein nicht zündfähiges Gas befindet.

Der zur Erzeugung des überkritischen Drallfeldes im Verbrennungsraum notwendige Drall kann dem Gasstrom bereits vor dem Eintritt in den Ringkanal aufgeprägt werden. Der

Le A 18 430

- 7 -

Drall kann in einer Ausführungsform durch tangentiales Einleiten des Gases in eine Vorkammer aufgeprägt werden, wobei der Drall beim Durchströmen des Ringkanals im wesentlichen erhalten bleibt. Gemäß einer anderen Ausführungsform sind in der Vorkammer Leitbleche vorgesehen, durch die das zunächst ohne Drall einströmende Gas vor dem Eintritt in den Ringkanal in Rotation versetzt wird. Vorteilhaft wird das tangentiale Einströmen in die Vorkammer mit weiterer Drallerzeugung durch Leitbleche innerhalb der Vorkammer kombiniert.

Es ist jedoch auch möglich, daß Gas im wesentlichen drallfrei durch den Ringkanal strömen zu lassen, und durch in der Verbrennungskammer vorgesehene Leitflächen zu erzeugen. Wegen der hohen Temperaturbelastung, der diese Leitflächen ausgesetzt sind, bestehen diese vorzugsweise aus temperaturbeständigen keramischen Material. Die Leitflächen können aus ebenen oder gekrümmten Platten bestehen.

Die Druckdifferenz zwischen dem der Verbrennungseinrichtung zugeführten Gas zu dem hinter dem Brenner austretenden Gas beträgt zwischen etwa 1 und 500 mbar, vorzugsweise zwischen 1 und 100 mbar, besonders bevorzugt zwischen 20 und 100 mbar. Die Druckdifferenz wird bevorzugt durch Erzeugung eines Unterdruckes auf der Austrittsseite des Brenners bereitgestellt.

Die Verbrennung der explosiblen Gase erfolgt bei Temperaturen zwischen etwa 700 und 1500°C, bevorzugt zwischen 700 und 900°C.

Durch die Verbrennung der Gase im überkritischen Drallfeld kann der Volumenstrom des zu verbrennenden Gases in weiten

- 8 -

Bereichen geregelt werden. Bei einem maximalen Druckverlust in der Verbrennungseinrichtung von etwa 50 mbar beträgt der Regelbereich bei Kohlenwasserstoffen etwa 1:10, bei einem Acetylen/Luftgemisch oder $H_2S$/Luftgemisch etwa 1:5 und bei einem Wasserstoff/Luftgemisch etwa 1:2. Bei Inkaufnahme höherer Vordrücke kann der Regelbereich weiter vergrößert werden. Die Flamme eines vorgemischten Gases brennt dann stabil, wenn die Flammengeschwindigkeit und die Strömungsgeschwindigkeit an einem Ort in der Flamme im Gleichgewicht stehen. Bei geringem Gasdurchsatz brennt die Flamme an der Stelle des Eintritts des beruhigten Gasstromes im Brennerraum und verlagert sich bei höheren Gasmengen, d.h. höheren Einströmgeschwindigkeiten in dem Bereich der peripheren Vorwärtsströmung des überkritischen Drallfeldes im Brennerraum.

Zur Gewährleistung einer guten Stabilisierung der Flamme im Brennerraum ist es vorteilhaft, die Querschnittsfläche des Brennerraums in mindestens einer Ebene quer zur Brennerachse mit einer Einschnürung zu versehen. Auf der Austrittsseite dieser Einschnürung bilden sich dann nach außen gerichtete Strömungswirbel aus, die die Flamme im Falle hohen Gasdurchsatzes an der Einschnürung festhalten. Vorteilhaft befindet sich die Einschnürung in einer Ebene quer zur Brennerachse, deren Entfernung von der Ebene des Eintritts des beruhigten Gasstromes in den Brennerraum etwa gleich dem Durchmesser des Brennerraums beträgt.

Der Sauerstoffgehalt des zu verbrennenden Gases kann zwischen 0 und 21 % betragen. Um eine vollständige Verbrennung zu gewährleisten, ist es notwendig, zumindest soviel Sauer-

- 9 -

stoff in den Brenner einzuführen, wie stöchiometrisch zu einer vollständigen Verbrennung notwendig ist. Bevorzugt enthält das zu verbrennende Gas den Sauerstoff um den Faktor 1 bis 4 überstöchiometrisch, besonders bevorzugt um den Faktor 1,5 bis 3 Gegebenenfalls kann dem zu verbrennenden Gas vor der Einleitung in die Verbrennungseinrichtung die notwendige Menge an Zusatzluft zugemischt werden. Es ist jedoch auch möglich, die Zusatzluft über von dem Ringkanal getrennte Einführungsorgane, gegebenenfalls ebenfalls unter Drallerzeugung, einzuleiten.

Insbesondere bei sehr stark schwankendem Anfall von zu verbrennendem Gas, wenn das Risiko besteht, daß aufgrund zu geringen Gasanfalls die Mindestströmungsgeschwindigkeit im Ringkanal nicht aufrechterhalten werden kann, ist es vorteilhaft, dem zu verbrennenden Gas von vornherein soviel Luft zuzumischen, daß allein durch den Volumenstrom der zugemischten Luft die Mindestströmungsgeschwindigkeit im Ringkanal gewährleistet wird.
In diesem Fall wird eine Rückzündung auch dann vermieden, wenn zeitweise kein brennbares Gas anfällt.

In diesem zuletzt genannten Fall, oder wenn die zu verbrennenden Gase zeitweilig einen zu geringen Heizwert besitzten oder unbrennbar sind, ist es notwendig, der Verbrennungseinrichtung zusätzlich Brennstoff zuzuführen. Im Falle daß gasförmiger Brennstoff (z.B. Erdgas) zugeführt wird, kann dieser dem zu verbrennenden Gas vor der Einleitung in die Verbrennungseinrichtung zugemischt werden. Der Zusatzbrennstoff kann aber auch in der Achse des Ringkanals getrennt von diesem oder tangential in den Brenner eingeleitet werden. Vorteilhaft ist es,

Le A 18 430

- 10 -

den gasförmigen Brennstoff von der Austrittsseite des Brenners her in die axiale Rückströmung, wodurch diese noch verstärkt wird, einzuführen.

Im Falle des Einsatzes von flüssigem Zusatzbrennstoff (z.B. Heizöl) wird dieser vorteilhaft in der Achse des Ringkanals getrennt von diesem in den Brennerraum eingedüst.

Eine besonders vorteilhafte Ausführungsform des erfindungsgemäßen Verfahrens besteht darin, in den Brennerraum gleichzeitig mit in der Wärme zersetzbaren Verunreinigungen beladene Abwässer und/oder in der Wärme zersetzbare flüssige oder feinteilige feste Schadstoffe einzuführen. Die Abwässer und/oder flüssigen Schadstoffe werden vorteilhaft in der Achse des Ringkanals getrennt von diesem in den Brennerraum eingedüst. Feinteilige feste Schadstoffe werden vorteilhaft gemeinsam mit Zusatzluft pneumatisch in den Brennerraum gefördert.

Obwohl das Hauptanwendungsgebiet des erfindungsgemäßen Verfahrens in der thermischen Reinigung von zeitweise explosibler Abluft liegt, ist das Anwendungsgebiet nicht hierauf beschränkt. Das Verfahren kann vorteilhaft auch für die Energieerzeugung aus gasförmigen Energieträgern, wobei der Energieträger mit Sauerstoff und/oder Luft vorgemischt wird, eingesetzt werden, wenn ein weiter Regel-bereich verlangt wird.

- 11 -

Der Regelbereich des Brenners kann weiter erhöht werden, indem die Breite des Ringkanals je nach anfallender zu verbrennender Gasmenge verändert wird. Hierzu werden die Mantelflächen des Ringkanals konisch ausgebildet, wobei sich der Durchmesser des Ringkanals zum Austrittsende hin verkleinern kann oder vergrößern kann. Im Extremfall bestehen die Wände des Ringkanals aus zwei Scheiben, wobei der Volumenstrom durch den Ringkanal in radialer Richtung zur Brennerachse verläuft. Bei sich änderndem Anfall an zu verbrennendem Gas werden dann die beiden, den Ringkanal begrenzenden Konen gegeneinander verschoben, so daß sich der Querschnitt des Ringkanals ändert. Dadurch kann durch Verengung des Querschnitts bei geringem Gasanfall die Mindestströmungsgeschwindigkeit im Ringkanal aufrechterhalten werden, so daß die Rückzündsicherheit nicht gefährdet wird. Bei vermehrtem Gasanfall kann der Brenner durch Vergrößerung des Querschnitts des Ringkanals ohne Erhöhung des Gasdrucks zwischen dem im Brenner zugeführten Gas und dem hinter dem Brenner austretenden Gas, d.h. ohne das die Geschwindigkeit des Gasstroms im Ringkanal erhöht werden müßte, bei günstiger Energiebilanz betrieben werden.

Besonders vorteilhaft wird das erfindungsgemäße Verfahren eingesetzt, wenn die Betriebsbedingungen wie Aufrechterhaltung der rückzündsicheren Mindestgeschwindigkeit und Verbrennungstemperatur automatisch überwacht und geregelt werden. Z.B. kann die rückzündsichere Mindestgeschwindigkeit durch Messung und Regelung der Strömungsgeschwindigkeit in der Zuleitung der zu verbrennenden Gase zum Brenner oder durch Messung und Regelung der Druckdifferenz zwischen dem der Verbrennungseinrichtung zugeführten Gas und dem hinter dem Brenner austretenden Gas selbsttätig aufrechterhalten werden, wobei im Falle zu geringer Strömungsgeschwindigkeit über auf die Meßgröße ansprechende Ventile Zusatzluft dem

Le A 18 430

- 12 -

zu verbrennenden Gas zugeführt wird. Die Verbrennungstemperatur kann durch Thermoelemente oder pyrometrisch gemessen werden, wobei im Falle zu geringer Temperatur die Regelung durch zusätzliche Einspeisung von Brennstoff, oder im Falle zu hoher Verbrennungstemperatur durch zusätzliche Einspeisung von Luft erfolgt.

Weitere Merkmale und bevorzugte Ausführungsformen des erfindungsgemäßen Verfahrens werden bei der nun folgenden Beschreibung der Vorrichtung zur Durchführung des erfindungsgemäßen Verfahrens, die ebenfalls Gegenstand der vorliegenden Erfindung ist, näher erläutert.

Bei der Beschreibung der Vorrichtung wird auf die anliegenden Figuren Bezug genommen.

Figur 1 zeigt einen Querschnitt in axialer Richtung der erfindungsgemäßen Vorrichtung mit Drallerzeugung durch tangentiales Einleiten des zu verbrennenden Gases in die Vorkammer.
Figur 2 zeigt einen Schnitt 2-2 durch die Vorrichtung der Figur 1.
Figur 3 zeigt eine andere Ausführungsform der erfindungsgemäßen Vorrichtung, wobei die Drallerzeugung durch in der Vorkammer vorgesehene Drallbleche erfolgt.
Figur 4 zeigt einen Schnitt 4-4 durch die Vorrichtung der Figur 3.
Figuren 5 bis 8 zeigen bevorzugte Ausführungsformen mit unterschiedlich ausgebildeten Mantelformen für den Ringkanal, wobei vorgesehen werden kann, daß die Breite des Ringkanals regelbar ausgebildet ist.
Figur 9 zeigt Möglichkeiten auf für die regelbare Ausführung der Ringkanalbreite sowie für weitere zweckmäßige Hilfseinrichtungen.
Figur 10 zeigt einen axialen Schnitt durch die Vorrichtung gemäß Figur 9, wobei die Schnittebene gegenüber der in Figur 9 gezeigten um 90° gedreht ist.
Figur 11 zeigt die erfindungsgemäß besonders bevorzugte Ausbildung des Ringkanals.

Le A 18 430

- 13 -

Im einzelnen kommt den in den Figuren angegebenen Ziffern
folgende Bedeutung zu:

1. Zufuhreinrichtung für die zu verbrennenden Gase

2. Vorkammer

3. Ringkanal

3a. Brennerseitige Ringkanalmantelfläche

3b. Brenner abgewandete Ringkanalmantelfläche

4. Verbrennungsraum

5. Drallerzeugungselemente

6. Kühlkammern

6a. Kühlmittelzufuhr

7. Verstelleinrichtung zur Regelung der Ringkanalbreite

8. Federbalg

9. Schauglas zur Flammenbeobachtung

10. Zentralrohr zur Einführung von Hilfseinrichtungen in den
Verbrennungsraum

11. verstellbarer Ringspalt zur Druckregulierung in der Vorkammer.

Die erfindungsgemäße Vorrichtung zur rückzündsicheren Verbrennung zumindest zeitweise explosibler Gase und/oder Gasgemische besteht aus einer Vorkammer (2), Elementen zur
Drallerzeugung (5), einer zylindrischen Brennkammer (4)
sowie einem zwischen der Vorkammer (2) und der Brennkammer (4)
angeordneten Ringkanal (3).

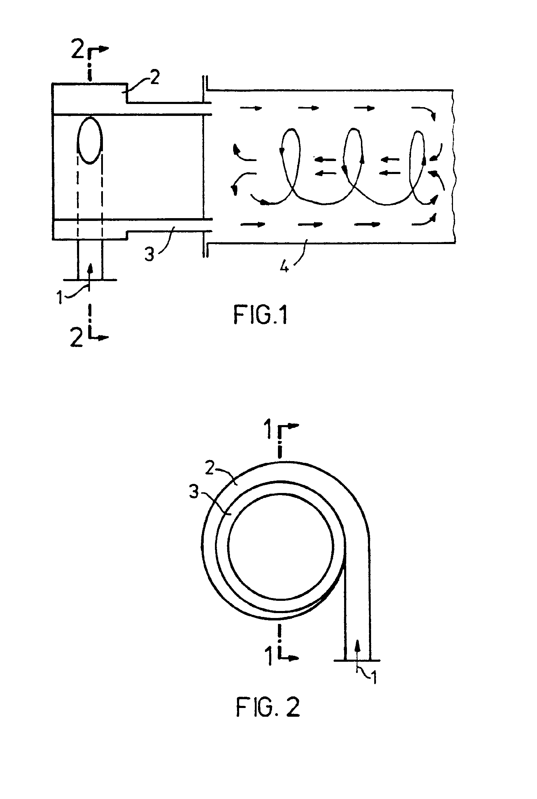

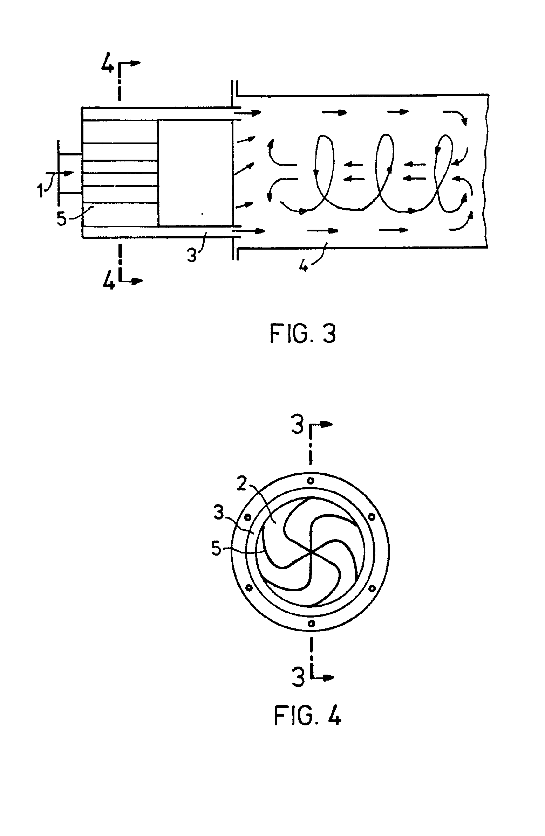

Das Element zur Drallerzeugung kann in einer relativen Zuordnung des Einströmorgans (1) zur Vorkammer (2) bestehen,
indem die zu verbrennenden Gase tangential in die Vorkammer
eingeblasen werden (siehe Figur 1 und Figur 2). In einer
anderen Ausführungsform nach Figuren 3 und 4 sind Ablenkbleche

Le A 18 430

- 14 -

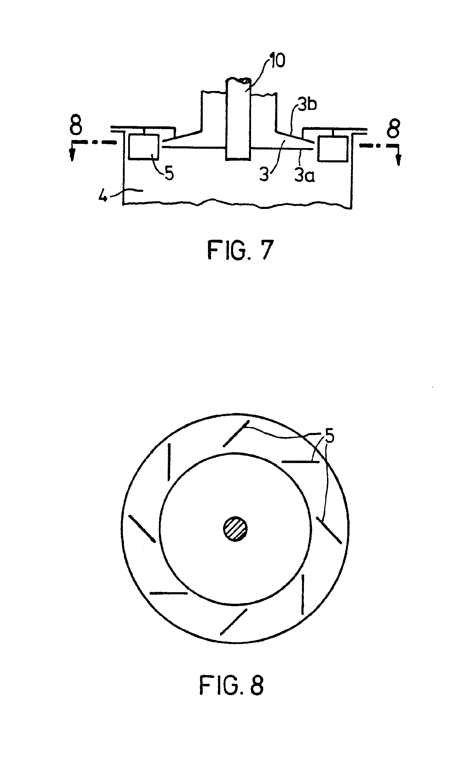

(5) in der Vorkammer zur Erzeugung des Dralls vorgesehen.
Gemäß einer weiteren Ausführungsform der Erfindung befinden
sich die Drallerzeugungselemente (5) in Form von Ablenkplatten
gemäß Figur 7 in der Brennkammer selbst. Wegen der hohen
Temperaturbelastung, der diese in der Brennkammer vorgesehenen
Drallerzeugungselemente ausgesetzt sind, bestehen diese vorzugsweise aus keramischem Material. Die Ablenkplatten können
aus ebenen oder gekrümmten Platten bestehen.

Bevorzugt wird eine Anordnung nach Figuren 1 und 2 eingesetzt,
wobei der Drall durch tangentiales Einführen der zu verbrennenden Gase in die Vorkammer erzeugt wird.

Der Ringkanal (3) besitzt eine Breite, d.h. einen Abstand
zwischen innerem und äußerem Ringkanalmantel zwischen 1 und
60 mm, vorzugsweise zwischen 5 und 40 mm, besonders bevorzugt
zwischen 10 und 25 mm. Die Länge des Ringkanals soll das
drei bis zehnfache, vorzugsweise das vier bis sechsfache seiner
Breite betragen, um eine ausreichende Beruhigung des Gasstroms
zu gewährleisten. Eine größere Länge des Ringkanals ist im allgemeinen nicht störend, sondern kann sogar zu einer weitergehenden Beruhigung der Gasströme führen, jedoch sind die
obengenannten Verhältnisse von Länge zu Breite im allgemeinen
ausreichend.

Der Ringkanal kann durch zwei zylindrische, konzentrische
Rohre gemäß Figur 1 und Figur 3 gebildet sein. Wegen der
konstruktiven Unkompliziertheit wird eine solche Ausbildung
des Ringkanals durch konzentrische Rohre bevorzugt, wenn die
zu verbrennenden Gase keinen extremen Mengenschwankungen

Le A 18 430

- 15 -

unterliegen. Schwankungen der Menge des zu verbrennenden Abgases um dem Faktor 3 bis 10 je nach Gaszusammensetzung
werden von einem Brenner mit so ausgebildetem Ringkanal im
allgemeinen rückzündsicher verbrannt. Ein stärkerer Rückgang
des Anfalls an zu verbrennenden Gasen, der die Aufrechterhaltung der rückzündsicheren Mindestgeschwindigkeit im Ringkanal gefährdet, kann dann durch Zumischen von Umgebungsluft
zu dem zu verbrennenden Gas aufgefangen werden.

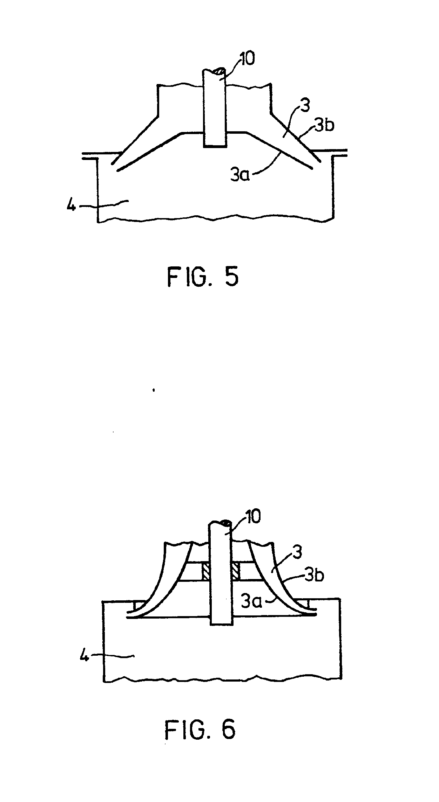

Vorteilhaft ist es, die Ringkanalmantelflächen konisch, sich
in Richtung auf den Verbrennungsraum hin sich erweiternd z.B.
gemäß Figur 5 auszubilden, weil hierbei der zylindrische Mantel
des Verbrennungsraums (4) durch die aus dem Ringkanal austretenden zu verbrennenden Gase unter einem Winkel angeströmt
wird, so daß die Mantelfläche des Verbrennungsraums zur Verstärkung des Dralls in der Verbrennungskammer beiträgt. Der
Ringkanal wird dabei so ausgebildet, daß die Breite des Ringkanals sich mit zunehmendem Radius vermindert, damit sich die
offene Querschnittsfläche des Ringkanals, d.h. der Strömungsquerschnitt für das verbrennende Gas, nicht vergrößert.
Eine Vergrößerung der offenen Querschnittsfläche in Strömungsrichtung würde zur Verminderung der Strömungsgeschwindigkeit
führen, wodurch die Gefahr der Unterschreitung der Mindestgeschwindigkeit gegeben wäre. Dagegen ist eine überproportionale
Verminderung der Breite des Ringkanals mit Verminderung der
offenen Querschnittsfläche im allgemeinen nicht schädlich,
da hierdurch lediglich eine Beschleunigung des Gasstromes im
Ringkanal bewirkt wird.

Bei der zuletzt genannten Ausführungsform des Ringkanals wird
dann eine optimale Beruhigung des Gasstromes im Ringkanal er-

Le A 18 430

- 16 -

reicht, wenn die Mittellinie zwischen zwei in der Querschnittsfläche liegenden Mantellinien eine Kurve nach folgender Gleichung
beschreibt und ferner die Breite des Ringkanals mit dem Radius
so abnimmt, daß der offene Querschnitt erhalten bleibt:

$$(I) \qquad r = \sqrt{r_o^2 + \left(\left.\frac{v_t}{v_a}\right|_{r_o} a\right)^2}$$

dabei bedeuten:

r = gleich der Abstand des Ortes der Mittellinie von der Ringkanalachse

$r_o$= der Abstand der Mittellinie von der Ringkanalachse am Ort
des Eintritts der zu verbrennenden Gase in den Ringkanal

$\left.\dfrac{v_t}{v_a}\right|_{r_o}$ das Verhältnis von tangentialer und axialer Gasgeschwindigkeit am Ort des Eintritts des Gases in den
Ringkanal

a    Abstand des Ortes der Mittellinie in axialer Richtung
von der Ebene senkrecht zur Ringkanal-Achse in der Höhe
des Eintritts der Gase in den Ringkanal.

In diesem Falle ist die Reibung des Gasstromes an der Wand
des Ringkanals minimal.

Eine weitere Ausführungsform der erfindungsgemäßen Vorrichtung
besteht darin, daß die den Ringkanal bildenden Mantelflächen
gegeneinander verschoben werden können, so daß die Breite des

Le A 18 430

- 17 -

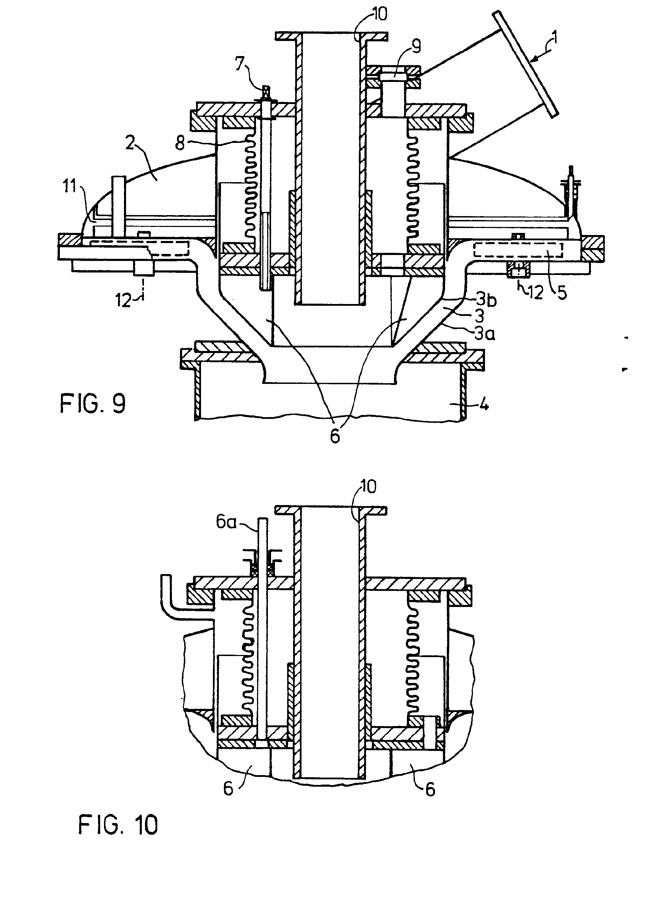

Ringkanals regelbar ist. Diese Ausführungsform wird bevorzugt dann eingesetzt, wenn ein extrem großer Regelbereich des Brenners bezüglich der Menge des zu verbrennenden Gases verlangt wird. Eine Ausführungsform einer solchen Vorrichtung ist in Figur 9 dargestellt. Der Ringkanal wird durch zwei parallele konische Mantelflächen (3a) und (3b) gebildet. Da die Breite des Ringkanals über die Länge des Ringkanals erhalten bleibt, wird das Gas beim Durchströmen des Ringkanals aufgrund der Verminderung der offenen Querschnittsfläche beschleunigt. Die dem Verbrennungsraum abgewandte Mantelfläche (3b) ist durch Betätigung der Schraube (7) in axialer Richtung verschiebbar. Selbstverständlich können anstelle der Schraube (7) auch beliebige geeignete andere Vortriebsvorrichtungen zur die Ringkanalmantelfläche (3b) vorgesehen sein, wie z.B. hydraulische oder pneumatische. Es kann auch vorgesehen sein, daß die Ringkanalmantelfläche (3b) federnd, z.B. auf einem Luftpolster gehalten wird, und die Breite des Ringkanals je nach anfallender zu verbrennender Gasmenge und den sich dadurch in der Vorkammer aufbauenden Gasdruck selbsttätig regelt.

Besonders bevorzugt für die regelbare Ausführung des Ringkanals wird eine Form der Mantelflächen (3a) und (3b), wobei der axiale Querschnitt der Mantelflächen (Mantellinien in Achsenrichtung) mindestens in dem dem Verbrennungsraum (4) zugewandten Bereich einen Ausschnitt aus der Kurve gemäß folgender Formel beschreibt:

$$\frac{a}{r_1} = \frac{1}{2}\frac{r}{r_1}\sqrt{\left(\frac{r}{r_1}\right)^2 - 1} - \frac{1}{2}\ln\left(\frac{r}{r_1} + \sqrt{\left(\frac{r}{r_1}\right)^2 - 1}\right) \qquad (II)$$

dabei bedeuten:

Le A 18 430

- 18 -

a   die Koordinate in Richtung der Brennerachse

r   den Abstand der Mantelfläche von der Achse

$r_1$   eine Normierungskonstante der Dimension Länge.

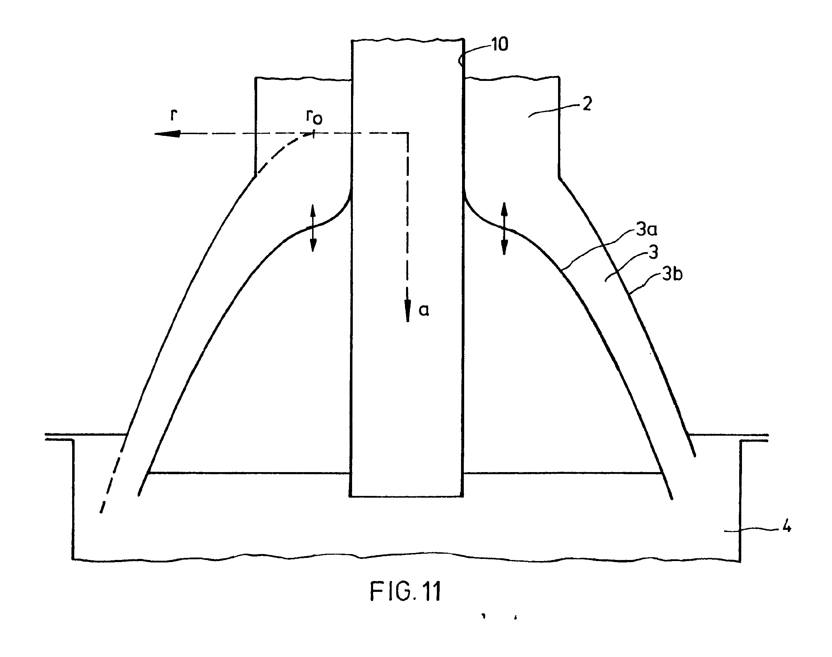

Eine solche Ausführungsform des Ringkanals ist in Figur 11 dargestellt. Bei dieser Form des Ringkanals ist bei jeder Breite des Ringkanals die offene Querschnittsfläche über die Länge des Ringkanals konstant.

Bevorzugt wird dabei der Drall beim Eintritt der zu verbrennenden Gase in den Ringkanal so eingestellt, daß die Reibung des Gasstroms an den Mantelflächen in der Nähe des Austritts des Gasstroms aus dem Ringkanal möglichst gering ist. Dies ist dann der Fall, wenn die Ringkanalmittellinie zumindest im Bereich des Austritts des Gasstromes aus dem Ringkanal mit einem Ausschnitt aus der Kurve nach Formel (I) übereinstimmt.

Weitere zweckmäßige Ausgestaltungen der erfindungsgemäßen Vorrichtung ergeben sich aus Figur 9 und Figur 10, auf die im folgenden Bezug genommen wird. Es ist zweckmäßig, zur Gewährleistung einer ausreichenden Größe des Löschabstandes in der Nähe der Ringkanalmantelfläche Kühlkammern (6) vorzusehen, in die über Zuleitungen (6a) flüssiges oder gasförmiges Kühlmedium gefördert wird. Vorzugsweise wird als Kühlmedium Umgebungsluft eingesetzt. Zur Beobachtung der Flamme im Verbrennungsraum kann es zweckmäßig sein ein Sichtfenster (9) vorzusehen. In der Vorrichtung gemäß Figur 9 sind neben der Drallerzeugung durch tangentiales Einführen der zu verbrennenden Gase (1) in die Vorkammer (2) Drallbleche (5) vorgesehen, die durch Veränderung des Anstellwinkels über Führungs-

Le A 18 430

bolzen (12) drehbar gehaltert sind. Dies ist insbesondere dann von Vorteil, wenn bei einem Prototypen der erfindungsgemäßen Vorrichtung der günstigste Drall experimentell ermittelt werden soll.

Die Vorkammer (2) dient der gleichmäßigen Ausbreitung des durch das Einführungsorgan (1) beschickten zu verbrennenden Gases zur gleichmäßigen Beaufschlagung auf den Ringkanal über seinen Umfang. Es kann hier zweckmäßig sein, über einen Ringschlitz (11) mit verstellbarer Ringblende als Drosselventil eine gleichmäßige Beaufschlagung des Gases auf den Umfang des Ringkanals zu gewährleisten.

Es ist ferner zweckmäßig, in der Achse des Ringkanals ein Rohr (10) vorzusehen, durch das weitere Hilfsaggregate wie z.B. eine elektrische Zündeinrichtung, Zufuhreinrichtungen für Zusatzbrennstoff bzw. Zusatzluft oder Zufuhrleitungen zur Eindüsung von mit in der Wärme zersetzbaren Verunreinigungen beladenen Abwässern und/oder zur pneumatischen Einführung von feinteiligen in der Wärme zersetzbaren festen Stoffen vorzusehen.

Obwohl diese weiteren zweckmäßigen Ausführungsformen in den übrigen Figuren nicht gezeichnet sind, da diese Prinzipsskizzen darstellen, ist es selbstverständlich, daß diese zweckmäßigen Ausgestaltungen nicht an die in den Figuren 9 und 10 gezeigten Ausführungsformen des Ringschlitzkanals gebunden sind.

Le A 18 430

- 20 -

Obwohl erfindungsgemäß eine Rückzündung durch den Ringkanal
bei störungsfreiem Betrieb mit großer Sicherheit vermieden wird,
wird der Fachmann für den Fall einer Störung weitere Sicherungen gegen eine Rückzündung bis in den Bereich der Quelle der zu
verbrennenden Gase vorsehen, wie z.B. Flammsieb und
Tauchung. Ferner ist es zweckmäßig, den Brenner druckstoßfest auszuführen, um eine Zerstörung im Falle einer störungsbedingten Rückzündung zu vermeiden.

Le A 18 430

- 21 -

Patentansprüche

1. Verfahren zur rückzündsicheren thermischen Verbrennung zumindest zeitweise explosibler Gase und/oder Gasgemische, dadurch gekennzeichnet, daß das zu verbrennende Gas und/oder Gasgemisch vor dem Einleiten in einen Verbrennungsraum beruhigt wird, indem dieses einen hindernisfreien Ringkanal ausreichender Länge durchströmt, wobei die Strömungsgeschwindigkeit in dem Ringkanal größer ist, als die unter den möglichen zu verbrennenden Gaszusammensetzungen auftretende größte Flammenausbreitungsgeschwindigkeit in dem beruhigten Gasstrom, daß dem Gasstrom ferner ein ausreichender Drall aufgeprägt wird, wobei die Drallachse mit der Ringkanal- und Verbrennungsraumachse zusammenfällt, so daß sich im Verbrennungsraum ein überkritisches Drallfeld mit peripherer Vorwärts- und innerer Rückströmung ausbildet, und wobei gegebenenfalls zusätzlich Brennstoff und/oder Luft dem Verbrennungsraum zugeführt wird.

2. Verfahren nach Anspruch 1, dadurch gekennzeichnet, daß der Drall dem Gasstrom zumindest teilweise durch tangentiales Einströmen des Gases in eine dem Ringkanal vorgeschaltete Vorkammer aufgeprägt wird.

3. Verfahren nach einem der Ansprüche 1 oder 2, dadurch gekennzeichnet, daß die zu verbrennenden Gase mit einer Temperatur, die mindestens unterhalb von deren Selbstentzündungstemperatur liegt, vorzugsweise bei einer Temperatur zwischen Umgebungstemperatur und 100°C, in den Verbrennungsraum eingeführt werden.

Le A 18 430

0001438

- 22 -

4. Verfahren nach einem der Ansprüche 1 bis 3, dadurch gekennzeichnet, daß die Wandflächen des Ringkanals gekühlt werden.

5. Verfahren nach mindestens einem der Ansprüche 1 bis 4, dadurch gekennzeichnet, daß die Druckdifferenz zwischen dem der Verbrennungseinrichtung zugeführten Gas und dem hinter dem Brenner austretenden Gas zwischen 1 und 500 mbar beträgt.

6. Verfahren nach Anspruch 5, dadurch gekennzeichnet, daß die Druckdifferenz durch Erzeugung eines Unterdruckes auf der Austrittsseite des Brenners bereitgestellt wird.

7. Verfahren nach mindestens einem der Ansprüche 1 bis 6, dadurch gekennzeichnet, daß dem Brennerraum zusätzlich mit in der Wärme zersetzbaren Verunreinigungen beladene Abwässer und/oder in der Wärme zersetzbare flüssige oder feinteilige feste Schadstoffe zugeführt werden.

8. Brenner zur rückzündsicheren Verbrennung zu mindest zeitweise explosibler Gase und/oder Gasgemische bestehend aus einer Vorkammer (2), Elementen zur Drallerzeugung (5), einer zylindrischen Brennkammer (4) sowie einem zwischen der Vorkammer (2) und der Brennkammer (4) angeordneten Ringkanal (3).

9. Brenner nach Anspruch 8, dadurch gekennzeichnet, daß die Breite des Ringkanals zwischen 1 und 60 mm, vorzugsweise zwischen 5 und 40 mm, besonders bevorzugt zwischen 10 und 25 mm beträgt.

Le A 18 430

- 23 -

10. Brenner nach einem der Ansprüche 8 oder 9, dadurch gekennzeichnet, daß die Länge des Ringkanals das 3 bis 10-fache, vorzugsweise das 4 bis 6-fache seiner Breite beträgt.

Le A 18 430

FIG.1

FIG. 2

FIG. 3

FIG. 4

FIG. 5

FIG. 6

FIG. 7

FIG. 8

FIG. 9

FIG. 10

FIG. 11

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – C – 232 500 (SOC. ANON. L'ACE- TYLENE DISSOUS DU SUD-EST) <br><br> * Ganze Patentschrift * <br><br> — | 1 |
| | DE – A – 2 434 960 (COMPAGNIE D'ETUDES ET DE PARTICIPATIONS INDUSTRIELLES) <br><br> * Seite 1, Absatz 1; Seite 3, Absätze 2,3; Seite 5, Absätze 5,6,7; Seite 7, Absatz 1; Figuren 1,2 * <br><br> — | 1 |
| E,P | FR – A – 2 366 517 (BAYER A.G.) <br><br> * Seite 1; Seite 2, Zeilen 1-21; Seite 6, Zeilen 18-38; Seite 7; Seite 8, Zeilen 1-5; Seite 13, Zeilen 16-39; Seite 14, Zeilen 1-4; Seite 16, Anspruch 1; Figur 1 * <br><br> — | 1,2,7 |
| A | DE – A – 2 317 513 (BOEHLER-ZENKNER) | 1 |
| A | GB – A – 1 465 310 (NILS OSTBO AB) | 1 |
| A | US – A – 2 581 075 (BUCK) | 1 |
| A | FR – A – 1 409 309 (THERMANU) | 1 |

**KLASSIFIKATION DER ANMELDUNG (Int.Cl.³)**

F 23 G 7/06
F 01 N 3/10
B 01 D 53/34

**RECHERCHIERTE SACHGEBIETE (Int. Cl.³)**

F 23 G
F 23 D
F 01 N

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-01-1979 | PHOA |